# EUROPÄISCHE PATENTSCHRIFT

(11) **EP 2 119 947 B1**
(45) Veröffentlichungstag und Bekanntmachung des Hinweises auf die Patenterteilung: **14.01.2015**
(21) Anmeldenummer: 09006576.4
(22) Anmeldetag: 15.05.2009
(51) Int. Cl.: F16K 1/44

(54) **Doppelabsperrventil, insbesondere für gasförmige Medien**
Double gate valve, particularly for gaseous media
Soupape d'arrêt double, notamment pour milieux gazeux

(30) Priorität: 16.05.2008 DE 102008024040
(43) Veröffentlichungstag der Anmeldung: 18.11.2009
(73) Patentinhaber: UNI-GERÄTE E. Mangelmann ELEKTROTECHNISCHE FABRIK GmbH, D-47652 Weeze (DE)
(72) Erfinder: Kleining, Georg, 47906 Kempen (DE); Dienstuhl, Björn, 47269 Duisburg (DE)
(74) Vertreter: Sroka, Peter-Christian

(56) Entgegenhaltungen:
- EP-A1- 1 798 456
- EP-A2- 1 209 393
- DE-A1- 3 614 425
- DE-C2- 19 525 384
- GB-A- 1 147 429

## Beschreibung

Die Erfindung betrifft ein Doppelabsperrventil gemäß dem Oberbegriff des Patentanspruchs 1.

*Bei einem in der* EP 1 798 456 A1 *beschriebenen Doppelabsperrventil hat die Zwischenkammer 4 eine solche Gehäusegestaltung, derart, dass das Medium starken Richtungsänderungen unterliegt. Das erfindungsgemäße Ventilgehäuse ist so ausgeführt, dass sich die Zwischenkammer zwischen den beiden Ventileinheiten koaxial zu den beiden Stellgliedern befindet, wodurch sich ein günstiger Strömungsverlauf mit möglichst wenig Umlenkungen des Medienflusses ergibt. Bei dem bekannten Ventils sind die beiden Ventileinheiten im Wesentlichen als bloße Ventilteller ausgebildet und nicht als Topfkolben, von denen das dem Auslassraum 1.2 zugeordnete topfkolbenartige Stellglied 3b mit mindestens einer Druckausgleichsbohrung versehen ist.*

*Doppelabsperrventile sind weiterhin beschrieben in der* EP 1 209 393 A2 *und den* GB 1 147 429 A *und* US 2,344,354 A*.*

Bei den in der EP 1 209 393 A2 und der US 2,344,354 A beschriebenen Ventilen haben die zwischen den Ventileinlässen und den Ventilauslässen und damit die zwischen den Ventilsitzen liegende Zwischenkammer über ihrer Höhe einen gleichbleibenden Durchmesser.

Bei dem in der GB 1 147 429 A beschriebenen Doppelabsperrventil hat die zwischen dem Ventileinlass und dem Ventilauslass befindliche Zwischenkammer die Form eines Diffusors mit einem sich in Strömungsrichtung erweiternden Querschnitt mit der Folge, dass der dem Ventileinlass zugeordnete Ventilsitz einen kleineren Durchmesser hat als der dem Ventilauslass zugeordnete Ventilsitz.

Bei einem in der DE 195 25 384 C2 beschriebenen Doppelabsperrventil werden zum Öffnen des Ventils beide Stellglieder bzw. Ventilteller in gleicher Richtung zum Beispiel nach oben verstellt, und zum Schließen des Ventils werden beide Stellglieder bzw. Ventilteller ebenfalls in gleicher Richtung zum Beispiel nach unten verstellt. Bei diesem Ventil befindet sich zwischen dem Ventileinlass und dem Ventilauslass eine Zwischenkammer mit über die Zwischenkammerhöhe gleichbleibendem Durchmesser.

Der Erfindung liegt die Aufgabe zugrunde, *ausgehend von dem in der* EP 1 798 456 A1 *beschriebenen Doppelabsperrventil* ein in konstruktiver Hinsicht einfaches und zuverlässig funktionierendes Doppelabsperrventil zu schaffen.

*Diese Aufgabe wird gelöst mit dem Merkmal gemäß dem Kennzeichen des Anspruchs 1.*

Auf diese Weise ist ein in konstruktiver Hinsicht einfaches und zuverlässig wirkendes Doppelabsperrventil geschaffen, bei dem auch dem Bestreben Rechnung getragen ist, die zur Ventilbetätigung benötigte Kraft so gering wie möglich zu halten.

Infolge der konstruktiven Dimensionierung der die Topfkolben aufnehmenden Zylinder und der jeweiligen Ventilsitze unterstützt das interne Medium zusätzlich zur Schraubenfeder die Schließkraft. Durch diese Eigenschaft können die Ventile z.B. als Sicherheitsabsperrventile nach EN 161 eingesetzt werden.

*Dadurch, dass der* Boden des dem Auslassraum zugeordneten topfkolbenartigen Stellgliedes mit mindestens einer Druckausgleichsbohrung versehen *ist,* wodurch in der Schließstellung dieser zweiten Ventileinheit neben der in Richtung des Ventilsitzes wirkenden Federkraft, vorzugsweise mittels Schraubendruckfeder, *wird durch den* gegen die Rückseite des Topfkolbens wirkenden Druck des z.B. gasförmigen Mediums eine in Schließrichtung wirksame Kraft *ausgeübt.*

*Diese in Schließstellung wirkende Druckkraft kann dadurch erhöht werden, dass gemäß einer bevorzugten Ausführungsform der Erfindung der Durchmesser Dk2 des den auslassseitigen Topfkolben aufnehmenden Zylinders größer ist als der Durchmesser Di2 des dem auslassseitigen Topfkolben zugewandten Abschnitts der Zwischenkammer.*

Die Erfindung wird im Folgenden an Hand der Zeichnung näher beschrieben:
Figur 1 zeigt eine Schnittansicht einer ersten Ausführungsform des Doppelabsperrventils mit Hubmagneten zum Antrieb der Stellglieder;
Figur 2 zeigt eine Schnittansicht *einer zweiten Ausführungsform* des erfindungsgemäßen Doppelabsperrventils mit Kolben-Zylindereinheiten zum Antrieb der Stellglieder;
Figur 3 zeigt in vergrößerter Darstellung eine Detailansicht der Stellglieder mit zugeordneten Durchmesserbezeichnungen.

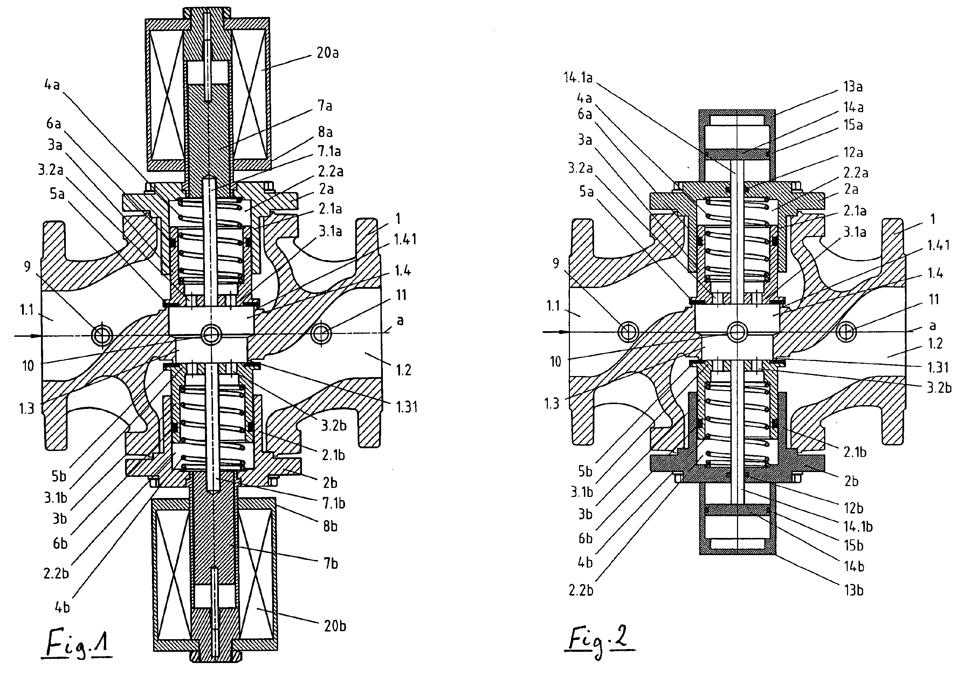

Das in den Figuren 1 und 2 dargestellte Ventilgehäuse 1 hat einen Einlassraum 1.1 sowie einen diesem Einlassraum 1.1 diametral gegenüberliegenden Auslassraum 1.2. Zwischen den Einlass- und Auslassräumen 1.1; 1.2 liegt eine die beiden Einlass- und Auslassräume verbindende Zwischenkammer, bestehend aus zwei unterschiedliche Durchmesser aufweisenden Kammerabschnitten 1.3 und 1.4. Die Achse der Zwischenkammer liegt vorzugsweise senkrecht zur Hauptachse a der Flanschanschlüsse des Ventilgehäuses. An die Zwischenkammer 1.3; 1.4 schließen sich beidseitig Gehäuseöffnungen an, die durch obere und untere Flanschdeckel 2a und 2b verschlossen sind, die zentrale Öffnungen für Hubmagnetsysteme haben. An die Flanschdeckel 2a, 2b schließen Zylinderabschnitte 2.1a und 2.1b an, die zusammen mit den Flanschdeckeln 2a und 2b Zylinderkammern 2.2a und 2.2b begrenzen. In den Zylinderkammern 2.2a und 2.2b sind Topfkolben 3a bzw. 3b geführt, die mittels Radialdichtungen 6a und 6b gegenüber den Zylinderabschnitten 2.1a und 2.1b abgedichtet sind.

Die Böden 3.1a und 3.1b der Topfkolben 3a und 3b sind *jeweils* mit *mindestens einer Druckausgleichsbohrung* 3.2a bzw. 3.2b versehen und tragen *an nach außen gerichteten Flanschringen* Axialdichtungen 5a bzw. 5b.

Auf die Innenseiten der durch die Topfkolben 3a und 3b gebildeten Stellglieder wirken Schraubendruckfedern 4a bzw. 4b ein, von denen diese Stellglieder mit ihren Dichtungen 5a bzw. 5b gegen die an den Eingangs- und Ausgangsseiten der Zwischenkammer befindlichen Ventilsitze 1.41 bzw. 1.31 gedrückt werden.

Das Medium tritt bei geöffnetem Doppelabsperrventil eingangsseitig in den Einlassraum 1.1 des Gehäuses 1 ein und strömt durch die vorzugsweise zylindrische Zwischenkammer 1.4; 1.3 in die Auslasskammer 1.2 ein. Wenn nur eine Ventileinheit des Doppelabsperrventils geschlossen ist, ist der *Durchgang für das gasförmige oder flüssige Medium* gesperrt.

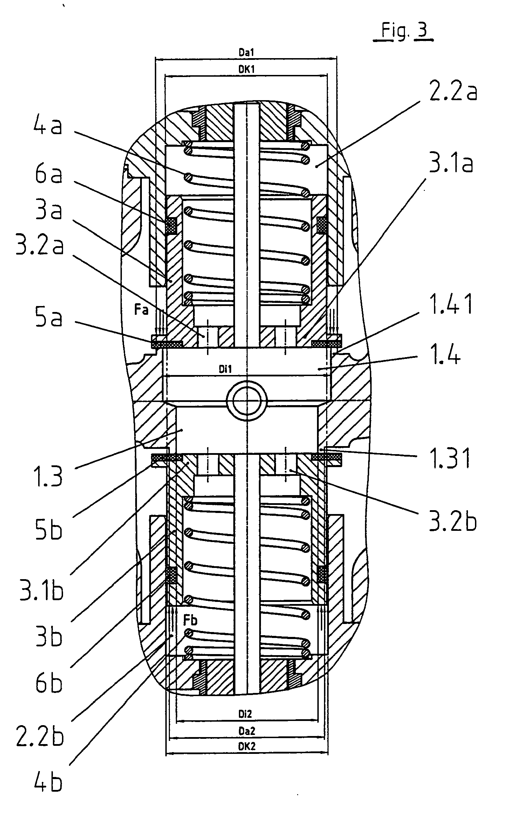

Wenn beide Ventileinheiten geschlossen sind, liegt das zu steuernde Medium am Eingang des Doppelabsperrventils mit dem Mediumsdruck an. Wie in Figur 3 dargestellt drückt der Mediumsdruck den Topfkolben 3.1a aufgrund der hydraulisch wirksamen *Flanschringfläche* Da1≥Dk1 gegen den Ventilsitz 1.4.1. Die *vom Mediumdruck abhängige* Schließkraft Fa wird durch die Federkraft der Feder 4a zusätzlich unterstützt.

Wenn die erste Ventileinheit *durch Betätigung des Topfkolbens 3a* geöffnet wird, strömt das Medium in die Zwischenkammer 1.4; 1.3 und durch *die Druckausgleichsbohrung bzw.* die Druckausgleichsbohrungen 3.2b in den Topfkolben 3b und den diesen Topfkolben aufnehmenden Zylinder 2.2b. Der Topkolben 3.1b wird im geschlossenem Zustand ebenfalls *abhängig* von *der* hydraulisch wirksamen *Flansch*ringfläche Dk2≥Di2 und der daraus resultierenden Schließkraft Fb *gegen* den Ventilsitz *1.31* gedrückt und *dabei* zusätzlich von der Schraubenfeder 4b unterstützt.

Infolge der Schließkräfte Fa und Fb wird damit bei beiden Ventileinheiten der Betriebdruck des Mediums als Schließkraft für die Stellglieder genutzt. Gleichzeitig werden die jeweiligen Öffnungsstellkräfte auf ein Minimum reduziert, da das Medium nur die geringen Schließkräfte Fa und Fb und nicht die eventuell wirkenden vollflächigen Flächen aus den Sitzdurchmessern Da1 und Da2 überwinden muss.

Die *Druckausgleichsbohrung bzw. die* Druckausgleichsbohrungen 3.2a im Bereich des Bodens des Topfkolbens *3a* haben die Aufgabe, beim Schließen des Topfkolbens 3a einen Druckausgleich zwischen *den Kammern* 1.1, 1.3, 1.4 und dem Raum im Bereich der Schraubenfeder 4.a zu schaffen. Der Topfkolben 3a kann somit *im Wesentlichen unbeeinflusst durch den* Betriebsdruck geschlossen werden.

Die Druckausgleichsbohrung*en* 3.2b *sind* erforderlich, damit das Medium in *den* die Schraubenfeder 4b aufnehmenden Topfkolben 3b eindringt und beim Schließen des Topfkolbens 3b einen Druckausgleich zwischen dem die Schraubenfeder 4b aufnehmenden Raum und dem Kammerabschnitt 1.3 schafft. Hierdurch kann der Topfkolben ohne Einfluss des Betriebdruckes geschlossen werden. Die Druckausgleichsbohrung 3.2b ist zusätzlich in der Geschlossenstellung des Topfkolbens 3b erforderlich, damit das Medium hydraulisch die Schließkraft Fb erzeugt.

Bei der in den Figuren 1 bis 3 oben dargestellten Ventileinheit ist der Außendurchmesser Da1 des ringförmigen Ventilsitzes 1.4.1 vorzugsweise größer als der Durchmesser Dk1 des das Stellglied 3a aufnehmenden Zylinderraums 2.2a.

Bei der in Figur 1 dargestellten Ausführungsform erfolgt der Antrieb der durch die Topfkolben 3a und 3b gebildeten Stellglieder mittels Hubmagneten, bestehend aus Erregerwicklungen 20a bzw. 20b, Magnetkernen 7a und 7b sowie die Magnetkerne 7a und 7b mit den die Hubkolben 3a bzw. 3b verbindenden Spindeln 7.1a und 7.1b.

Bei der Ausführungsform gemäß Figur 2 erfolgt der Antrieb der Stellglieder 3a bzw. 3b mittels Kolben-Zylindereinheiten, bestehend jeweils aus einem Zylinder 13a, 13b, einem vorzugsweise einseitig federbelastetem, einfach wirkendem Kolben 14a bzw. 14b und Schubspindeln 14.1a und 14.1b und jeweils zugeordneten Dichtungen 12a; 15a bzw. 12b; 15b.

## Patentansprüche

1. Doppelabsperrventil für gasförmige oder flüssige Medien mit einem Gehäuse (1), zwischen dessen Einlass- und Auslassräumen (1.1 bzw. 1.2) eine Zwischenkammer (1.3; 1.4) angeordnet ist, der zwei koaxial und im Abstand voneinander liegende Ventilsitze (1.31 bzw. 1.41) zugeordnet sind, von denen der dem Einlassraum (1.1) zugeordnete Ventilsitz (1.41) einen größeren Innendurchmesser hat als der dem Auslassraum (1.2) zugeordnete Ventilsitz (1.31) und gegen die in der Ruhe- und Schließstellung des Doppelabsperrventils die Ventilteller (3.1a bzw. 3.1b) von in Richtung der Ventilsitze federbelasteten, getrennt öffnenden und schließenden Stellgliedern (3a bzw. 3b) abdichtend anliegen, die in entgegengesetzten Richtungen einerseits in ihre Schließstellungen bzw. in entgegengesetzten Richtungen in ihre Öffnungsstellungen verstellbar sind, **dadurch gekennzeichnet, dass**
a) die Zwischenkammer zwischen den beiden Ventilsitzen (1.31; 1.41) liegt und in zwei axial aneinander anschließende Abschnitte (1.4 und 1.3) unterteilt ist, und dass der Innendurchmesser (Di 1) des dem Einlassraum (1.1) zugeordneten Kammerabschnitts (1.4) größer ist als der Durchmesser (Di2) des dem Auslassraum (1.2) zugewandten Kammerabschnitts (1.3),
b) die Stellglieder als in Zylindern (2.2a bzw. 2.2b) abdichtend geführte Topfkolben (3a bzw. 3b) ausgebildet sind, deren Böden (3.1a; 3.1b) an ihren Außenseiten die mit den Ventilsitzen (1.31 bzw. 1.41) zusammenwirkenden Ventilteller bilden, und
c) der Boden (3.1b) des dem Auslassraum (1.2) zugeordneten topfkolbenartigen Stellglieds (3b) mit mindestens einer Druckausgleichsbohrung (3.2b) versehen ist.

2. Doppelabsperrventil nach Anspruch 1, **dadurch gekennzeichnet, dass** der Durchmesser (Dk2) des das Stellglied (3b) aufnehmenden Zylinders (2.2b) gleich oder größer ist als der Durchmesser (Di2) des zugeordneten Zwischenkammerabschnitts 1.3).

3. Doppelabsperrventil nach Anspruch 1, **dadurch gekennzeichnet, dass** der Boden (3.1a) des dem Einlassraum (1.1) zugeordneten Topfkolbens (3a) mit mindestens einer Druckausgleichsbohrung (3.2a) versehen ist.

4. Doppelabsperrventil nach Anspruch 3, **dadurch gekennzeichnet, dass** der Durchmesser (Dk1) des Topfkolbens (3a) aufnehmenden Zylinders (2.2a) gleich oder kleiner ist als der Außendurchmesser (Da1) des diesem ringförmig ausgebildeten Ventilsitzes (1.41) des Topfkolbens (3a).

5. Doppelabsperrventil nach einem der Ansprüche 1 bis 4, **gekennzeichnet durch** auf die Topfkolben (3a, 3b) einwirkende Schraubendruckfedern (4a bzw. 4b).

6. Doppelabsperrventil nach einem der Ansprüche 1 bis 5, **gekennzeichnet durch** auf die Topfkolben (3a; 3b) einwirkende Hubmagnete (8a; 8b).

7. Doppelabsperrventil nach einem der Ansprüche 1 bis 6, **gekennzeichnet durch** auf die Topfkolben (3a; 3b) wirkende Kolben-Zylindereinheiten (13a, 14a; 13b, 14b), deren Kolben (14a; 14b) vorzugsweise einseitig federbelastet sind.

## Claims

1. Double shut-off valve for gaseous or liquid substances containing a housing (1), provided with an intermediate chamber (1.3; 1.4) between inlet- and outlet spaces 1.1 and 1.2 respectively) of the housing, which intermediate chamber is provided with two co-axial valve seats 1.31 and 1.41 respectively) being spaced a part from each other, the valve seat (1.41) of the inlet space (1.1) having a greater inside diameter than the valve seat (1.31) of the outlet space (1.2), against which valve seats in the rest and closing position of the double shut-off valve the valve plates (3.1a and 3.1b, respectively) of actuator members (3a and 3b, respectively) abut sealingly, which actuator members are spring loaded in the direction of the valve seats and can be opened and closed separately and are adjustable in opposite directions into their closing positions, on the one hand, and, respectively, in opposite directions into their open positions, on the other hand, **characterized in that**
(a) the intermediate chamber is positioned between the two valve seats (1.31; 1.41) and is devided into two sections axially joined to each other, and that the inside diameter (Di1) of the chamber section (1.4) facing the inlet space (1.1) is greater than the inside diameter (Di2) of the chamber section (1.3) facing the outlet space (1.2),
(b) the actuator members in the form of pot pistons (3a and 3b, respectively) are sealingly guided within cylinders (2.2a and 2.2b, respectively), the bottoms (3.1a; 3.1b) of which at their outer sites constitute the valve plates coacting with the valve seats (1.31 and 1.41, respectively), and **in that**
(c) the bottom of the actuator member (3b) associated to the outlet space (1.2) is provided with at least one pressure compensation bore (3.2b).

2. Double shut-off valve according to claim 1, **characterized in that** the diameter (Dk2) of the cylinder (2.2b) containing the actuator member (3b) is equal to or greater than the diameter (Di2) of the associated intermediate chamber section (2).

3. Double shut-off valve according to claim 1, **characterized in that** the bottom (3.1a) of the pot piston (3a) associated to the inlet space (1.1) is provided with at least one pressure compensating bore (3.2a).

4. Double shut-off valve according to claim 3, **characterized in that** the diameter (Dk1) of the cylinder (2.2a) containing the pot piston (3a) is equal to or smaller than the outer diameter (Da1) of the associated annular valve seat (1.41) of the pot pistons (3a).

5. Double shut-off valve according to one of the claims 1 to 4, **characterized by** helical compression springs (4a and 4b, respectively) acting onto the pot pistons (3a, 3b).

6. Double shut-off valve according to one of the claims 1 to 5, **characterized by** lifting magnets (8a; 8b) acting onto the pot pistons (3a; 3b).

7. Double shut-off valve according to one of the claims 1 to 6, **characterized by** piston-cylinder units (13a, 14a; 13b, 14b) acting onto the pot pistons (3a; 3b) the pistons (14a; 14b) of said units preferably being spring loaded at one side.

## Revendications

1. Double valve de coupure pour des substances gazeuses ou liquides avec un corps contenant des espaces d'entrée et de sortie (1.1 et 1.2, respectivement) entre lesquels est disposée une chambre intermédiaire (1.3; 1.4) à laquelle sont attribuées deux sièges de vanne (1.31 et 1.41, respectivement) coaxialement arrangés avec distance entre eux, le siège (1.41) associé à l'espace d'entrée ayant un diamètre intérieur plus grand que le diamètre de la siège (1.31) associé à l'espace de sortie et contre lesquels dans la position de repos et dans la position fermée de la double valve de coupure les plaques de vanne (3.1a et 3.1b, respectivement) des membres de réglage (3a et 3b respectivement), chargés par ressort dans la direction des sièges de vanne et ouvrants et fermants séparément, butent étanchement, lesquels membres de réglage sont ajustable, dans des directions opposées, d'un coté, dans leurs positions fermées, respectivement, d'autre part, dans des directions opposées dans leurs positions ouvertes, caractérisée que
a) la chambre intermédiaire est située entre les deux sièges de vanne (1.31; 1.41) et est divisée en deux sections (1.4 et 1.3) raccordées axialement, et que le diamètre intérieur (Di1) de la section (1.4) de la chambre intermédiaire associée à l'espace d'entrée est plus grande que le diamètre (Di2) de la section (1.3) de la chambre intermédiaire
b) les membres de réglage ont la forme des pots piston (3a et 3b respectivement) et sont guidés de manière étanche dans des cylindres (2.2a et 2.2b respectivement), les fonds (3.1a; 3.1b) des pots piston formant à leurs extérieurs les plaques de vanne coopérants avec les sièges de vanne (1.31 et 1.41, respectivement), et
c) le fond (3.1b) du membre de réglage (3b) associé à l'espace de sortie (1.2) est fourni avec un trou de compensation de pression (3.2b).

2. Double valve de coupure selon la revendication 1, **caractérisée en ce que** le diamètre (Di2) du cylindre (2.2b) contenant le membre de réglage (3b) est le même ou plus grande que le diamètre (Di2) de la section (2) de la chambre intermédiaire.

3. Double valve de coupure selon la revendication 1, **caractérisée en ce que** le fond (3.1a) du cylindré (2.2a) contenant le pot piston (3a) est muni d'un alésage de compensation de pression (2.2).

4. Double valve de coupure selon la revendication 3, **caractérisée en ce que** le diamètre du cylindre (2.2a) contenant le pot piston (3a) est le même où plus petit que le diamètre extérieur (Da1) de la siège annulaire (1.41) du pot piston (3a).

5. Double valve de coupure selon l'une des revendications 1 à 4, **caractérisées par** des ressorts cylindriques de compression (4a et 4b, respectivement) agissant sur les pots pistons (3a, 3b).

6. Double valve de coupure selon l'une des revendications 1 à 5, **caractérisées par** des électro-aimants de levage (8a ; 8b) agissant sur les pots pistons (3a; 3b),

7. Double valve de coupure selon l'une des revendications 1 à 6, **caractérisées par** des unités piston/cylindre agissantes sur les pots piston (13a, 14a; 13b, 14b), les pistons chargés par ressort de préférences d'une côté.
